# EUROPÄISCHE PATENTSCHRIFT

(11) **EP 1 549 555 B1**
(45) Veröffentlichungstag und Bekanntmachung des Hinweises auf die Patenterteilung: **22.08.2012**
(21) Anmeldenummer: 03797289.0
(22) Anmeldetag: 10.09.2003
(51) Int. Cl.: B65D 88/02

(54) **GROSSVOLUMIGER BEHÄLTER MIT ZWEI BEHÄLTERTEILEN UND EINER STÜTZVORRICHTUNG IM VERBINDUNGSBEREICH**
LARGE-VOLUME CONTAINER COMPRISING TWO PARTS AND A SUPPORT DEVICE LOCATED IN THE CONNECTION REGION
CONTENANT DE GRAND VOLUME PRESENTANT DEUX PARTIES ET UN DISPOSITIF DE SOUTIEN AU NIVEAU DE LA JONCTION ENTRE LES DEUX PARTIES

(30) Priorität: 12.09.2002 DE 10242387
(43) Veröffentlichungstag der Anmeldung: 06.07.2005
(73) Patentinhaber: Richter, Günter, 57610 Altenkirchen (DE)
(72) Erfinder: Richter, Günter, 57610 Altenkirchen (DE)
(74) Vertreter: Schaumburg, Thoenes, Thurn, Landskron, Eckert
(86) Internationale Anmeldenummer: PCT/EP2003/010044
(87) Internationale Veröffentlichungsnummer: WO 2004/026711

(56) Entgegenhaltungen:
- DE-A- 3 833 646
- DE-U- 20 105 030

## Beschreibung

Die Erfindung betrifft einen Behälter aus Kunststoff, der aus zwei Behälterteilen besteht, die in einem Öffnungsbereich miteinander verbunden sind.

Ein derartiger Behälter ist aus der DE 201 05 030 U1 desselben Anmelders bekannt. Der beschriebene Behälter dient zur Lagerung von Flüssigkeiten und besteht aus mindestens zwei getrennt gefertigten und weitgehend identischen Behälterteilen. Jeder Behälterteil enthält einen oberen und einen unteren Strömungsstutzen mit einer Öffnung. Die beiden Behälterteile werden im Bereich des oberen Strömungsstutzens und im Bereich des unteren Strömungsstutzens miteinander verbunden. Ferner enthalten die Behälterteile Sicken zur Erhöhung der Stabilität.

Ein derartiger Behälter kann zur Aufnahme von Regenwasser oder Abwasser verwendet werden und soll für die unterirdische Lagerung geeignet sein. Bekannte Behälter haben eine kugelförmige, zylindrische oder quaderförmige Geometrie. Bei quaderförmig gestalteten Behältern wird im allgemeinen eine im Verhältnis zur Länge geringe Breite gewählt, um Erdlasten zu widerstehen.

Zum Erreichen eines großen Volumens muß dann die Behälterhöhe groß gewählt werden, was eine große Einbautiefe erfordert. Aus Gründen der Bodenbeschaffenheit, wie z.B. bei steinigen Böden oder bei Vorhandensein von Grundwasser, ist es häufig notwendig, die Einbautiefe gering zu halten.

Es ist Aufgabe der Erfindung, einen Behälter aus Kunststoff anzugeben, der bei einem großen Aufnahmevolumen für den Einsatz in der Erde geeignet ist und eine hohe Stabilität hat.

Diese Aufgabe wird durch die Merkmale des Anspruchs 1 gelöst. Vorteilhafte Weiterbildungen sind in den abhängigen Ansprüchen angegeben.

Gemäß der Erfindung wird das bereits beschriebene Prinzip beibehalten, bei dem der Behälter aus zwei Behälterteilen zusammengesetzt wird. Auf diese Weise können die Behälterteile mit relativ kleinen Blasformen hergestellt werden und gut transportiert werden. Jeder Behälterteil hat einen einzigen Verbindungsrahmen, der die Verbindungsöffnung enthält wobei erfindungsgemäß mindestens ein Verbindungsrahmen eine Stützvorrichtung enthält, die sich in vertikaler Richtung erstreckt. Dadurch wird der gesamte Behälter im Bereich der miteinander verbundenen Verbindungsrahmen gestützt und in diesem Bereich die Festigkeit erhöht. Der aus den beiden Behälterteilen zusammengesetzte Behälter hat damit eine hohe Formfestigkeit und kann große Erdlasten aufnehmen sowie Auftriebskräften im Grundwasser widerstehen.

Bei einem Ausführungsbeispiel hat der jeweilige Verbindungsrahmen eine Kreisform, dessen Außendurchmesser annähernd der Höhe des Behälters entspricht. Dadurch kann zwischen den beiden Behälterteilen eine große Öffnungsfläche für den Austausch von Flüssigkeit geschaffen werden. Weiterhin ist bei einem großen Durchmesser des Verbindungsrahmens die erforderliche Verbindung der beiden Behälterteile am Aufstellungsort, beispielsweise durch Verschweißen, einfacher auszuführen.

Gemäß einem weiteren Ausführungsbeispiel ist die Grundfläche des Behälters in etwa quadratisch. Demgemäß kann ein solcher Behälter leicht in das Erdreich einer vorhandenen quadratischen Grundstücksfläche eingebettet werden. Die dabei auftretenden erhöhten Erdlasten und Auftriebskräfte werden durch die Stützvorrichtung abgefangen.

Ausführungsbeispiele der Erfindung werden im folgenden anhand der Zeichnung erläutert. Darin zeigt:
- Figur 1: eine perspektivische Ansicht eines ersten Ausführungsbeispiels der Erfindung,
- Figur 2: den in Figur 1 gezeigten Behälter in einer Seitenansicht,
- Figur 3: ein Behälterteil mit angeformter, noch nicht abgetrennter Trennwand,
- Figur 4: ein Detail nach Figur 3,
- Figur 5: eine Ansicht der Figur 3 aus Richtung H1,
- Figur 6: den Behälter im zusammengebauten Zustand als Seitenansicht,
- Figur 7: einen Detailausschnitt aus Figur 6,
- Figur 8: Ansichten eines weiteren Ausführungsbeispiels der Erfindung,
- Figur 9: die beiden Behälterteile vor dem Zusammenbau,
- Figur 10: die zusammengebauten beiden Behälterteile,
- Figur 11: ein Detail nach Figur 10, bei dem Rippen miteinander verschweißt werden, und
- Figur 12: ein Detail nach Figur 10, bei dem die Verbindungsrahmen umlaufend verschweißt werden.

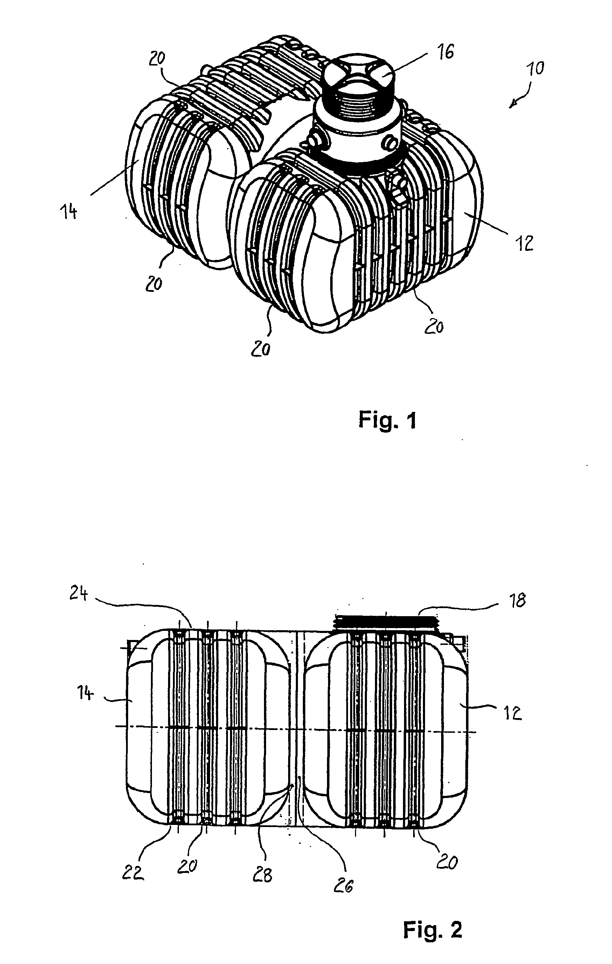

Figur 1 zeigt in einer perspektivischen Ansicht ein Ausführungsbeispiel der Erfindung, bei dem ein Behälter 10 aus zwei Behälterteilen 12, 14 zusammengesetzt ist. Die beiden Behälterteile 12, 14 bestehen aus Kunststoff, beispielsweise aus hochmolekularem Niederdruckpolyethylen, und sind im Blasformverfahren gefertigt. Der erste Behälterteil 12 enthält eine Füll- und Entleerungsöffnung 16. In den weiteren Teilen sind beide Behälterteile 12, 14 gleich aufgebaut, so daß jeder Behälterteil 12, 14 mit der gleichen Blasform hergestellt werden kann. Lediglich für den ersten Behälterteil 12 mit einem Einfüllstutzen 18 (vgl. Figur 2) wird in die Blasform dann ein Formeinsatz eingelegt.

Figur 2 zeigt den Behälter 10 in einer Seitenansicht, wobei der Aufbau für die Füll- und Entleerungsöffnung 16 abmontiert ist; zu erkennen ist somit nur ein Einlassstutzen 18 im Oberboden 24, über den der gesamte Behälter 10 gefüllt und entleert werden kann.

Jeder Behälterteil 12, 14 enthält in seiner Mantelfläche Sicken 20, die der Versteifung der äußeren Form des Behälters 10 dienen. Diese Sicken 20 sind rinnenartige Vertiefungen, die beim Kunststoffblasen in der Mantelfläche ausgeformt werden. Die Sicken 20 erhöhen die Steifigkeit des Mantelkörpers, so daß der Erdlast und den durch das Grundwasser auftretenden Auftriebskräften Rechnung getragen wird. Die Behälterteile 12, 14 sind an ihren Kanten abgerundet und weisen in ihrer Mantelfläche auch am Unterboden 22 und am Oberboden 24 die erwähnten Sicken 20 auf.

Jeder Behälterteil 12, 14 hat einen einzigen Verbindungsrahmen 26 bzw. 28, entlang dem die beiden Behälterteile 12, 14 miteinander verbunden sind.

Typischerweise hat der Behälter 10 für ein nutzbares Volumen von 5000 Liter Flüssigkeit ein quadratisches Grundmaß von etwa 2,3 m bei einer Höhe von 1,35 m. Der Einlassstutzen 18 hat einen typischen Durchmesser von 0,7 m.

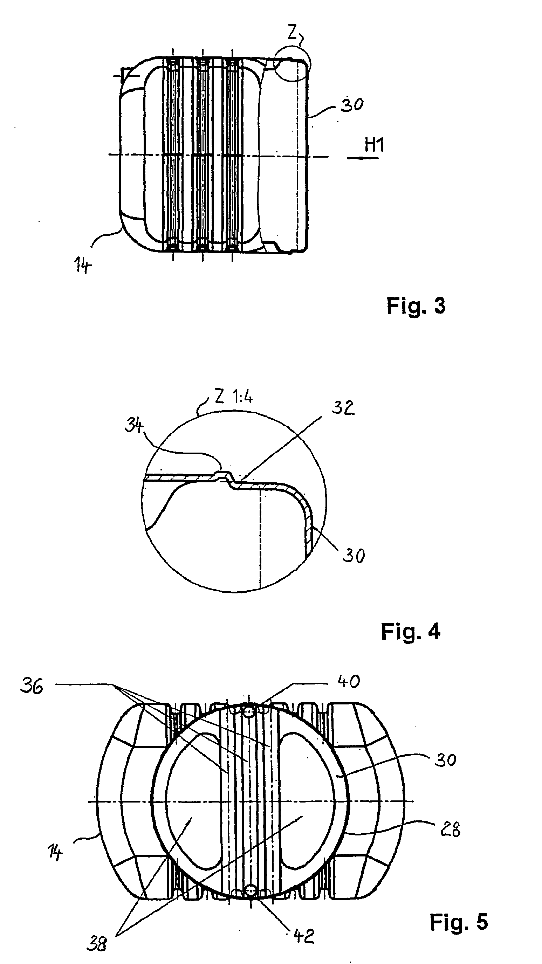

Figur 3 zeigt den Behälterteil 14, der im Kunststoffblasverfahren hergestellt wird. Bei dieser Herstellung wird eine als Stützvorrichtung dienende Trennwand 30 mit ausgeformt, deren Aufbau in Figur 4 als Ausschnitt Z im Maßstab 1:4 und in Figur 5 in einer Ansicht aus Richtung H1 genauer zu erkennen ist.

Figur 4 zeigt, daß entlang dem Umfang des Mantels des Behälterteils 14 ein erhabener Rand 34 ausgebildet ist. An der Stelle 32 wird dann die Trennwand 30 entlang dem Umfang abgetrennt.

Figur 5 zeigt eine Sicht aus Richtung H1 in Figur 3. Die Trennwand 30 enthält im mittleren Bereich Verstärkungsrippen 36 und Durchgangsöffnungen 38 beidseitig der Verstärkungsrippen 36. Im Bereich der Verstärkungsrippen 36 ist eine obere Bohrung 40 und eine untere Bohrung 42 vorgesehen, um einen Flüssigkeitsaustausch im Bereich der Verstärkungsrippen 36 zu ermöglichen.

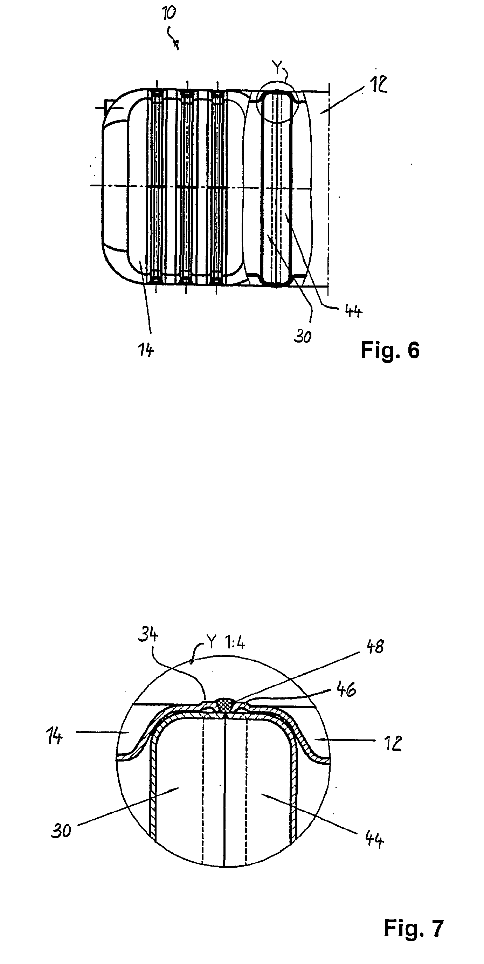

Figur 6 zeigt den Behälter 10 im zusammengebauten Zustand als Seitenansicht. Das Behälterteil 14 ist mit dem nur teilweise zu sehenden Behälterteil 12 zusammengesetzt, wobei die zum Behälterteil 14 gehörende Trennwand 30 und eine zum Behälterteil 12 gehörende Trennwand 44 einander zugewandt sind. Der Ausschnitt Y ist im Verhältnis 1:4 in Figur 7 als Querschnitt näher dargestellt. Die in den Figuren 3, 4 und 5 dargestellte Trennwand 30 ist an der Stelle 32 umlaufend abgetrennt worden und in die so entstandene Öffnung des Behälterteils 14 nach Umdrehen um 180° eingesetzt worden. Ähnliches ist beim Behälterteil 12 mit der Trennwand 44 geschehen. Somit stehen sich die beiden Behälterteile 12, 14 mit ihren Trennwänden 30, 44 einander gegenüber. Im Bereich des erhabenen Randes 34 des Behälterteils 14 und eines entsprechenden erhabenen Randes 46 des Behälterteils 12 erfolgt eine umlaufende Verschweißung mit dem Schmelzgut 48, wobei gleichzeitig der Mantelkörper der Behälterteile 12, 14 sowie die zugehörigen Trennwände 44, 30 miteinander verbunden werden. Die Trennwände 30, 44 enthalten die in Figur 5 dargestellten Rippen 36 und bilden die Stützvorrichtung zur Aufnahme vertikaler Kräfte. Die in der Figur 2 dargestellten Verbindungsrahmen 28, 26 der Behälterteile 14, 12 werden bei diesem Ausführungsbeispiel durch die Stirnflächen der offenen Behälterteile 14, 12 und die Stirnflächen der Trennwände 30 und 44 gebildet.

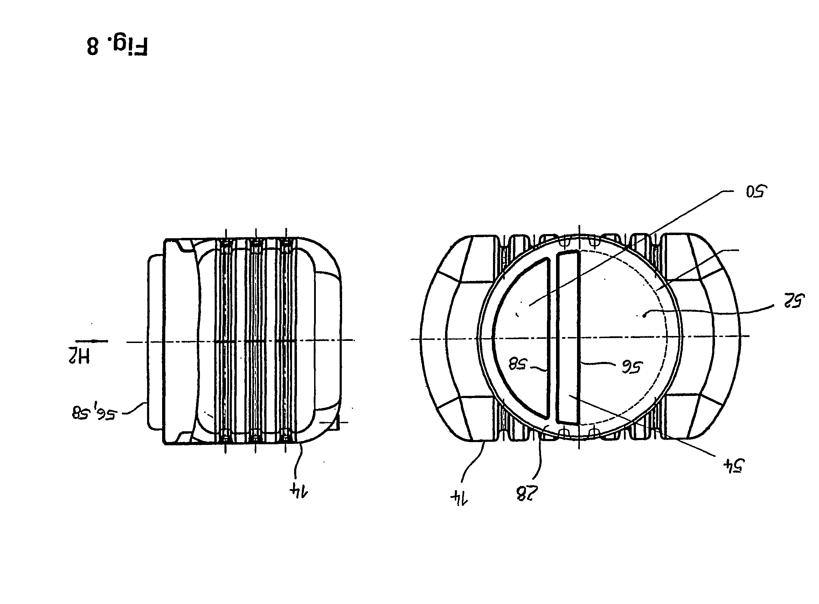

Die Figuren 8 bis 12 zeigen ein weiteres Ausführungsbeispiel der Erfindung, bei dem die einander zugewandten Verbindungsrahmen 28, 26 der Behälterteile 12, 14 ebenfalls eine Stützvorrichtung enthalten. Gleiche Teile sind weiterhin gleich bezeichnet.

In Figur 8 ist links eine Vorderansicht auf den Verbindungsrahmen 28 gezeigt, der als Verbindungsöffnung zwei Abschnitte 50, 52 enthält. Die linke Darstellung ist eine Ansicht aus Richtung H2 der rechts dargestellten Seitenansicht. Der Verbindungsrahmen 28 enthält in vertikaler Richtung eine Stützvorrichtung 54, die vorstehende Rippen 56, 58 enthält.

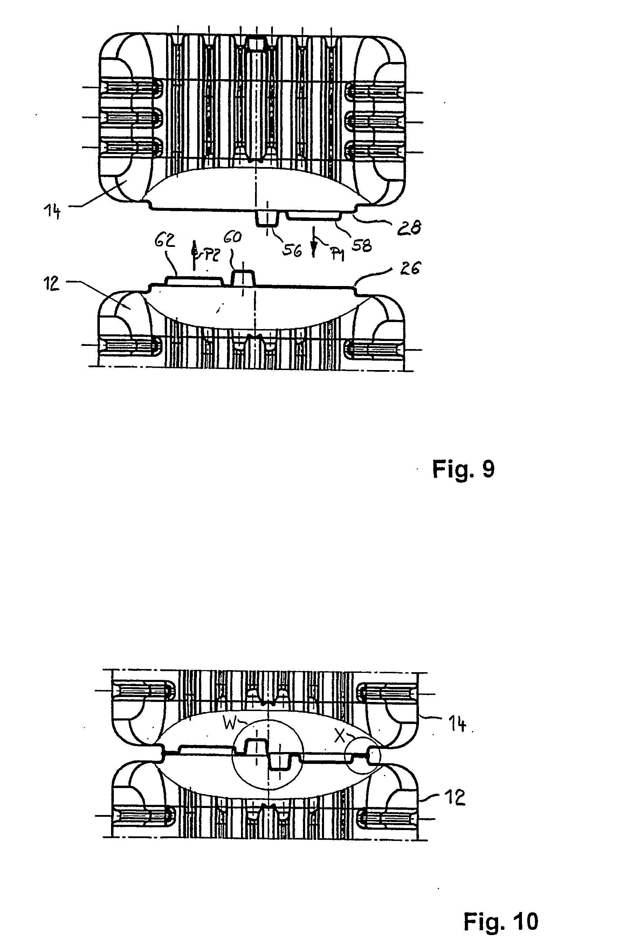

Figur 9 zeigt eine Darstellung mit den zwei bis auf die Oberböden identischen Behälterteilen 14, 12 mit zugehörigen Verbindungsrahmen 26, 28. Die Rippen 56, 58 des Behälterteils 14 und die gleichartigen Rippen 60, 62 des Behälterteils 12 sind zueinander versetzt angeordnet und werden beim Zusammenbau entsprechend den Pfeilen P1, P2 aufeinander zu bewegt.

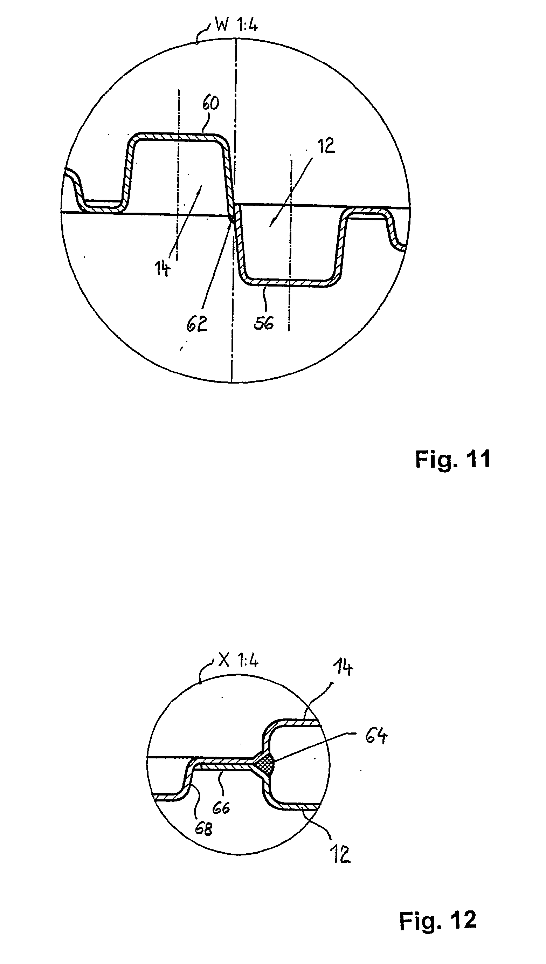

Figur 10 zeigt den Zusammenbau der Behälterteile 14, 12. Die Ausschnitte W in Figur 11 und X in Figur 12 zeigen Details der Verbindung der Verbindungsrahmen 26, 28. In Figur 11 ist dargestellt, daß die einander gegenüberstehenden Rippen 56, 60 in vertikaler Richtung miteinander an der Stelle 62 verschweiß werden. Eine andere Möglichkeit besteht darin, die beiden Rippen 56, 60 miteinander zu verschrauben oder zu vernieten. Wie in Figur 11 zu erkennen ist, ragen die Rippen 56, 60 jeweils in den anderen Behälterteil hinein, so daß sich weitere Vorteile im Hinblick auf die Stützfunktion ergeben.

Figur 12 zeigt den in Figur 10 bezeichneten Ausschnitt X. Entlang der beiden Verbindungsrahmen der Behälterteile 12, 14 erfolgt eine Verschweißung mit dem Schweißgut 64, wobei ein am Behälterteil 12 ausgebildetes umlaufendes randförmiges Zentrierfläche 66 an einer am Behälterteil 14 ausgebildeten vorragenden Stoßfläche 68 anliegt.

Es können zahlreiche Varianten vorgesehen sein. Beispielsweise kann es ausreichen, nur einen Verbindungsrahmen mit einer Stützvorrichtung auszustatten. Weiterhin ist es möglich, daß die Behälterteile unterschiedliche Grundflächen haben.

Vorzugsweise wird die Behälterbreite eines Behälterteils so gewählt, daß sie kleiner als der doppelte Durchmesser des jeweiligen Verbindungsrahmens ist.

### Bezugszeichenliste

- 10: Behälter
- 12, 14: Behälterteile
- 16: Füll- und Entleeröffnung
- 18: Einlassstutzen
- 20: Sicken
- 22: Unterboden
- 24: Oberboden
- 26, 28: Verbindungsrahmen
- 30: als Stützvorrichtung dienende Trennwand
- 32: Abtrennstelle
- 34: erhabener Rand
- 36: Verstärkungsrippen
- 38: Durchgangsöffnungen
- 40: obere Bohrung
- 42: untere Bohrung
- 44: als Stützvorrichtung dienende Trennwand
- 46: erhabener Rand
- 48: Schmelzgut
- 50,52: Öffnungsabschnitte
- 54: Stützvorrichtung
- 56, 58: Rippen
- 60, 62: Rippen
- P1, P2: Richtungspfeile
- 64: Schweißgut
- 66: Zentrierfläche
- 68: Stoßfläche

## Patentansprüche

1. Behälter aus Kunststoff,
wobei der Behälter (10) aus zwei Behälterteilen (12, 14) besteht, die in einem Öffnungsbereich miteinander verbunden sind, wobei
jeder Behälterteil (12, 14) einen einzigen Verbindungsrahmen (26, 28) hat, der die Verbindungsöffnung enthält und wobei
die Behälterteile (12, 14) entlang der einander zugewandten Verbindungsrahmen (26, 28) verbindbar sind,
**dadurch gekennzeichnet, daß** mindestens ein Verbindungsrahmen (26, 28) eine Stützvorrichtung (30, 44, 54) enthält, die sich im Verbindungsrahmen (26, 28) in vertikaler Richtung erstreckt.

2. Behälter nach Anspruch 1, **dadurch gekennzeichnet, daß** beide Verbindungsrahmen (26, 28) eine Kreisform haben, deren Außendurchmesser annähemd der Höhe des Behälters (10) entspricht.

3. Behälter nach Anspruch 1 oder 2, **dadurch gekennzeichnet, daß** die beiden Behälterteile (12, 14) mit Ausnahme eines Einlaßstutzens (18) einen im wesentlichen identischen Aufbau haben.

4. Behälter nach einem der vorhergehenden Ansprüche, **dadurch gekennzeichnet, daß** die Stützvorrichtung (54) vertikal verlaufende Versteifungsrippen (56, 58, 60, 62) enthält.

5. Behälter nach Anspruch 4, **dadurch gekennzeichnet, daß** die Versteifungsrippen (56, 58, 60, 62) aus der Ebene des Verbindungsrahmens (26, 28) hervorragen.

6. Behälter nach Anspruch 4 oder 5, **dadurch gekennzeichnet, daß** die Versteifungsrippen (56, 58, 60, 62) an ihrem unteren und oberen Enden jeweils Zentrierflächen (66) haben, die mit gegenüberliegenden Stoßflächen (68) zusammenwirken.

7. Behälter nach einem der vorhergehenden Ansprüche 4 bis 6, **dadurch gekennzeichnet, daß** einander gegenüberstehende Versteifungsrippen (56, 58, 60, 62) der beiden Behälterteile (12, 14) im Mittenbereich miteinander verbunden sind.

8. Behälter nach einem der vorhergehenden Ansprüche 1 bis 3, **dadurch gekennzeichnet, daß** die Stützvorrichtung eine Wand (30, 44) enthält.

9. Behälter nach Anspruch 8, **dadurch gekennzeichnet, daß** die Wand (30, 44) vertikal verlaufende Rippen (36) umfaßt.

10. Behälter nach Anspruch 8, **dadurch gekennzeichnet, daß** die Wand (30, 44) einen zylinderförmigen Rand hat, der in den Verbindungsrahmen (26, 28) eingesetzt ist, und daß die Verbindungsrahmen (26, 28) der beiden Behälterteile (12, 14) miteinander verschweißt werden, wobei die Schweißnaht (48) auch den Rand der Wand (30, 44) mit den Verbindungsrahmen (26, 28) verschweißt.

11. Behälter nach einem der vorhergehenden Ansprüche, **dadurch gekennzeichnet, daß** die Breite jedes Behälterteils (12, 14) kleiner als der doppelte Durchmesser des jeweiligen Verbindungsrahmens (26, 28) ist.

12. Behälter nach einem der vorhergehenden Ansprüche, **dadurch gekennzeichnet, daß** er aus hochmolekularem Niederdruckpolyethylen besteht.

13. Behälter nach einem der vorhergehenden Ansprüche, **dadurch gekennzeichnet, daß** er ein Fassungsvolumen von 4000 bis 6000 Liter hat.

14. Behälter nach einem der vorhergehenden Ansprüche, **dadurch gekennzeichnet, daß** er etwa eine quadratische Grundfläche hat.

## Claims

1. Container made of plastic,
wherein the container (10) consists of two container parts (12, 14) that are connected with each other in an opening area, wherein
each container part (12, 14) contains one single connecting frame (26, 28) containing the connecting opening; and wherein,
the container parts (12, 14) along the connecting frames (26, 28) facing each other can be connected ,
**characterized in that** at least one connecting frame (26, 28) contains a support device (30, 44, 54) that extends vertically in the connecting frame (26, 28).

2. Container according to claim 1, **characterized in that** both connecting frames (26, 28) are of circular shape, the outer diameter of which approximately corresponds to the height of the container (10).

3. Container according to claim 1 or 2, **characterized in that** both container parts (12, 14), with the exception of an inlet nozzle (18), are basically designed identically.

4. Container according to one of the preceding claims, **characterized in that** the support device (54) contains vertical stiffening ribs (56, 58, 60, 62).

5. Container according to claim 4, **characterized in that** the stiffening ribs (56, 58, 60, 62) protrude from the level of the connecting frame (26, 28).

6. Container according to claim 4 or 5, **characterized in that** the stiffening ribs (56, 58, 60, 62) at their upper and lower ends each have centering surfaces (66) acting together with opposing abutting surfaces (68).

7. Container according to one of the preceding claims 4 to 6, **characterized in that** opposing stiffening ribs (56, 58, 60, 62) of both container parts (12, 14) are connected with each other in the middle area.

8. Container according to one of the preceding claims 1 to 3, **characterized in that** the reinforcement device contains a wall (30, 44).

9. Container according to claim 8, **characterized in that** the wall (30, 44) comprises vertical ribs (36).

10. Container according to claim 8, **characterized in that** the wall (30, 44) has a cylindrical edge that is inserted in the connecting frame (26, 28), and **in that** the connecting frames (26, 28) of both container parts (12, 14) are welded with each other, wherein the welding line (48) welds as well the edge of the wall (30, 44) with the connecting frames (26, 28).

11. Container according to one of the preceding claims, **characterized in that** the width of each container part (12, 14) is smaller than the double diameter of the respective connecting frame (26, 28).

12. Container according to one of the preceding claims, **characterized in that** it consists of high molecular low pressure polyethylene.

13. Container according to one of the preceding claims, **characterized in that** it has a capacity volume of 4000 to 6000 litres.

14. Container according to one of the preceding claims, **characterized in that** it has an approximately square surface area.

## Revendications

1. Récipient en matière plastique,
le récipient (10) étant constitué de deux parties de récipient (12, 14) qui sont reliées entre elles dans une région d'ouverture,
chaque partie de récipient (12, 14) possédant un cadre de liaison unique (26, 28) qui contient l'ouverture de liaison, et
les parties de récipient (12, 14) pouvant être reliées le long des cadres de liaison (26, 28) dirigés l'un vers l'autre,
**caractérisé en ce que** au moins un cadre de liaison (26, 28) contient un dispositif de support (30, 44, 54) qui s'étend dans une direction verticale dans le cadre de liaison (26, 28).

2. Récipient selon la revendication 1, **caractérisé en ce que** les deux cadres de liaison (26, 28) ont une forme circulaire dont le diamètre extérieur correspond à peu près à la hauteur du récipient (10).

3. Récipient selon la revendication 1 ou 2, **caractérisé en ce que** les deux parties de récipient (12, 14) ont une structure sensiblement identique à l'exclusion d'un ajutage d'admission (18).

4. Récipient selon l'une des revendications précédentes, **caractérisé en ce que** le dispositif de support (54) contient des nervures de renforcement (56, 58, 60, 62) s'étendant verticalement.

5. Récipient selon la revendication 4, **caractérisé en ce que** les nervures de renforcement (56, 58, 60, 62) font saillie du plan du cadre de liaison (26, 28).

6. Récipient selon la revendication 4 ou 5, **caractérisé en ce que** les nervures de renforcement (56, 58, 60, 62) possède au niveau de chacune de leurs extrémités inférieure et supérieure des surfaces de centrage (66) qui coopèrent avec des surfaces opposées (68).

7. Récipient selon l'une des revendications précédentes 4 à 6, **caractérisé en ce que** des nervures de renforcement (56, 58, 60, 62), opposées l'une à l'autre, des deux parties de récipient (12, 14) sont reliées entre elles dans la région médiane.

8. Récipient selon l'une des revendications précédentes 1 à 3, **caractérisé en ce que** le dispositif de support contient une paroi (30, 44).

9. Récipient selon la revendication 8, **caractérisé en ce que** la paroi (30, 44) comporte des nervures (3) s'étendant verticalement.

10. Récipient selon la revendication 8, **caractérisé en ce que** la paroi (30, 44) possède un bord cylindrique qui est inséré dans le cadre de liaison (26, 28), et **en ce que** les cadres de liaison (26, 28) des deux parties de récipient (12, 14) sont soudés l'un à l'autre, le cordon de soudure (48) soudant également le bord de la paroi (30, 44) avec les cadres de liaison (26, 28).

11. Récipient selon l'une des revendications précédentes, **caractérisé en ce que** la largeur de chaque partie de récipient (12, 14) est inférieure au double du diamètre du cadre de liaison (26, 28) correspondant.

12. Récipient selon l'une des revendications précédentes, **caractérisé en ce qu'**il est en polyéthylène basse pression de masse moléculaire élevée.

13. Récipient selon l'une des revendications précédentes, **caractérisé en ce qu'**il a une contenance de 4000 à 6000 litres.

14. Récipient selon l'une des revendications précédentes, **caractérisé en ce qu'**il a à peu près une surface de base carrée.
